# EUROPEAN PATENT APPLICATION

(11) **EP 4 307 441 A1**
(43) Date of publication of application: **17.01.2024**
(21) Application number: 22936038.3
(22) Date of filing: 28.06.2022
(51) Int. Cl.: H01M 10/6556, H01M 10/613, H01M 10/625

(54) **BATTERY AND ELECTRICAL DEVICE**

(30) Priority: 19.04.2022 CN 202220903791 U
(71) Applicant: Contemporary Amperex Technology Co., Limited, Zhangwan Town, Jiaocheng District Ningde City, Fujian 352100 (CN)
(72) Inventor: LI, Yanlei, Ningde, Fujian 352100 (CN)
(74) Representative: Ran, Handong
(86) International application number: PCT/CN2022/101987
(87) International publication number: WO 2023/201884

(57) **Abstract**

The present application discloses a battery and an electric device. The battery includes: a battery cell; a thermal management component configured for accommodating a fluid to adjust the temperature of the battery cell; a connector provided between the first surface of the battery cell and the thermal management component and used for making the thermal management component attached onto the first surface, wherein the first surface is a concave-convex surface. The technical solution provided by the present application can improve the safety of the battery.

## Description

### Cross Reference to Related Applications

The present application claims the priority to Chinese patent application 202220903791.9, filed on April 19, 2022, and entitled "BATTERY AND ELECTRIC DEVICE", the entire content of which is incorporated herein by reference.

### Technical Field

The present application relates to the field of battery technology, and in particular, to a battery and an electric device.

### Background Art

Energy conservation and emission reduction are keys to the sustainable development of the automobile industry, and electric vehicles have become an important part of the sustainable development of the automobile industry, due to their advantages in energy conservation and environmental protection. For electric vehicles, battery technology is an important factor in its development.

In the development of battery technology, how to improve the safety of batteries is a technical problem to be solved urgently in battery technology.

### Summary

The present application provides a battery and an electric device, which can improve the safety of the batteries.

The present application is achieved through the following technical solutions.

In a first aspect, the present application provides a battery, including: a battery cell; a thermal management component configured for accommodating fluid to adjust the temperature of the battery cell; a connector, provided between the thermal management component and the first surface of the battery cell and configured for making the thermal management component attached to the first surface, wherein the first surface is a concave-convex surface.

In the technical solution of the embodiment of the present application, the first surface of the battery cell is provided as the concave-convex surface, which can increase the contact area between the first surface and the connector, avoid occurrence of the situation that the thermal management component is separated from the battery cell which is caused by the mutual separation phenomenon occurring due to expansion or mechanical vibration of the battery cell (the phenomenon that the connector is separated from the first surface due to expansion force or vibration), and ensure that the thermal management component is stably connected to the battery cell, so that the thermal management component can effectively adjust the temperature of the battery cell to ensure the safety of the battery.

In some embodiments, the connector is an adhesive layer.

In the technical solution of the embodiment of the present application, the thermal management component is bonded to the first surface of the battery cell through the adhesive layer. On the one hand, the assembly efficiency of the thermal management component and the battery cell can be improved, and on the other hand, since the first surface is the concave-convex surface, there is a larger bonding area between the adhesive layer and the battery cell, which can avoid occurrence of the situation that the thermal management component is separated from the battery cell which is caused by the debonding phenomenon occurring due to the expansion or mechanical vibration of the battery cell (the adhesive layer is separated from the first surface) and ensure that the thermal management component is stably connected to the battery cell, so that the thermal management component can effectively adjust the temperature of the battery cell to ensure the safety of the battery.

In some embodiments, the first surface has multiple grooves, the adhesive layer has a second surface and a third surface opposite to each other in its thickness direction, the second surface is connected to the thermal management component, the third surface has multiple protrusions, and the protrusions are embedded in the grooves.

In the technical solution of the embodiment of the present application, the protrusions on the third surface of the adhesive layer are embedded in the grooves on the first surface of the battery cell, which can effectively improve the connection strength between the adhesive layer and the battery cell, thereby ensuring the connection strength between the battery cell and the thermal management component, and avoid debonding phenomenon occurring due to the expansion force of the battery cell itself or the mechanical vibration of the battery cell, to ensure that the thermal management component is stably connected to the battery cell to effectively adjust the temperature of the battery cell and further ensure the safety of the battery.

In some embodiments, the multiple grooves are in dense dot-like arrangement.

In the technical solution of the embodiment of the present application, the number of the grooves is multiple, and the multiple grooves are in dot-like arrangement. On the one hand, it can effectively increase the bonding area between the first surface and the adhesive layer, and on the other hand, it can enable uniform force between the first surface and the adhesive layer. Each protrusion is embedded in the corresponding groove, which can effectively improve the connection strength between the adhesive layer and the first surface, so that the thermal management component is stably connected with the battery cell, ensuring the safety of the battery.

In some embodiments, the groove is tapered.

In the technical solution of the embodiment of the present application, tapered grooves can be conveniently and quickly formed on the first surface of the battery cell by means of stamping, etc., so as to reduce the difficulty in manufacturing of the battery cell. At the same time, when the grooves are tapered, the adhesive solution is injected between the thermal management component and the first surface, which can facilitate filling the adhesive solution into the grooves (the inner diameter of each of the grooves gradually decreases along its depth, so the adhesive solution is first filled in the portion with a large inner diameter, and as the amount of injected adhesive solution increases, it is gradually filled in the deep part with a small inner diameter, wherein since the inner diameter of the deep part is small, the filling amount is small, and the load of solution injection may be reduced), to form the protrusions after the adhesive solution is solidified. The stable connection between the thermal management component and the battery cell is achieved by tightly bonding the protrusions to the inner walls of the grooves.

In some embodiments, the grooves extend in a first direction, the multiple grooves are arranged at intervals in a second direction, and the first direction is perpendicular to the second direction.

In the technical solution of the embodiment of the present application, the multiple grooves are arranged at intervals in the second direction, and each groove extends in the first direction, which can effectively increase the bonding area between the first surface and the adhesive layer, thereby ensuring the connection strength between the battery cell and the thermal management component, avoiding that the thermal management component is separated from the battery cell and ensuring the safety of the battery.

In some embodiments, the first surface is a rectangular surface, one of the first direction and the second direction is the length direction of the first surface, and the other is the width direction of the first surface.

In the technical solution of the embodiment of the present application, since the first surface is a rectangular surface, one of the first direction and the second direction is the length direction of the first surface, and the other is the width direction of the first surface, positioning can be performed based on the outer contour of the first surface when processing the grooves, so as to reduce the difficulty in processing the grooves, thereby improving the manufacturing efficiency of the battery.

In some embodiments, two ends of each groove respectively extend to edges of the first surface.

In the technical solution of the embodiment of the present application, the two ends of each groove extend to the edges of the first surface. On the one hand, the groove extends from one edge of the first surface to another edge, which can reduce the difficulty in forming the groove, and on the other hand, it is convenient to inject the adhesive solution (adhesive injection) into the groove from the edge of the first surface, improve the efficiency of adhesive injection, and ensure that the groove is full of the adhesive solution, so that the adhesive layer formed after the solidification of the adhesive solution can be closely bonded to the inner wall of the groove and the non-groove area of the first surface, to ensure the connection strength between the adhesive layer and the battery cell.

In some embodiments, the cross-section of the groove is triangular or rectangular.

In the technical solution of the embodiment of the present application, when the cross-section of the groove is triangular, the protrusion is correspondingly triangular, and the two mutually inclined outer walls of the protrusion are bonded to the two mutually inclined inner walls of the groove, that is, two surfaces of the protrusion are bonded to the two surfaces of the groove, which can increase the bonding area between the first surface and the adhesive layer. When the cross-section of the groove is rectangular, the protrusion is correspondingly rectangular, and the top wall and two opposite side walls of the protrusion are bonded to the top wall and the opposite side walls of the groove respectively, that is, the three surfaces of the protrusion are bonded to the three surfaces of the groove, which can effectively increase the bonding area between the first surface and the adhesive layer.

In some embodiments, the battery cell includes a casing and an end cover, wherein the casing includes a bottom wall and a side wall, the side wall surrounds the bottom wall, with one end of the side wall being connected to the bottom wall, and the other end of the side wall defining an opening, the end cover covers the opening, and the first surface is the outer surface of the bottom wall.

In the technical solution of the embodiment of the present application, generally, the thermal management component is provided at the bottom wall of the battery cell. When the first surface is the outer surface of the bottom wall, the connection strength between the bottom wall and the connector can be improved, further improving the connection strength between the bottom wall and the thermal management component, avoiding the thermal management component from being separated from the battery cell, and ensuring the safety of the battery.

In a second aspect, the present application further provides an electric device, including the battery according to any one of the first aspect, wherein the battery is used to provide electric energy.

The above description is only an overview of the technical solution of the present application. In order to understand the technical solution of the present application more clearly, it can be implemented according to the contents of the description, and in order to make the above and other purposes, features and advantages of the present application more obvious and understandable, the following specifically cites the specific implementations of the present application.

### Brief Description of Drawings

In order to more clearly illustrate the technical solutions of the embodiments of the present application, the following will briefly introduce the drawings required to be used in the embodiments. It should be understood that the following drawings only show some embodiments of the present application, and thus should not be regarded as a limitation on the scope, and those skilled in the art can also obtain other related drawings based on these drawings without paying creative work.
FIG. 1 is a schematic structural view of a vehicle in some embodiments of the present application;
FIG. 2 is an exploded view of a battery in some embodiments of the present application;
FIG. 3 is a three-dimensional exploded view of a battery cell, a connector and a thermal management component in some embodiments of the present application;
FIG. 4 is a schematic view of a battery cell, a connector and a thermal management component in some embodiments of the present application;
FIG. 5 is an enlarged view of Place V in FIG. 3;
FIG. 6 is an enlarged view of Place VI in FIG. 4;
FIG. 7 is a schematic view of a battery cell in other embodiments of the present application;
FIG. 8 is an enlarged view of VIII in FIG. 7;
FIG. 9 is a schematic view of a battery cell and a connector in other embodiments of the present application; and
FIG. 10 is an enlarged view of Place X in FIG. 9.

Reference signs: 10-battery cell; 11-first surface; 110-groove; 12-casing; 13-end cover; 120-bottom wall; 121-side wall; 20-thermal management component; 40-connector; 41-second surface; 42-third surface; 420-protrusion; 1000-vehicle; 100-battery; 200-controller; 300-motor; 30-box body; 3 1-first part; 32-second part.

### Detailed Description of Embodiments

In order to make the purpose, technical solutions and advantages of the embodiments of the present application clearer, the technical solutions in the embodiments of the present application will be clearly described below in conjunction with the drawings in the embodiments of the present application. Obviously, the described embodiments are some but not all embodiments of the present application. Based on the embodiments in this application, all other embodiments obtained by those skilled in the art without paying creative efforts fall within the protection scope of the present application.

Unless otherwise defined, all technical and scientific terms used in the present application have the same meaning as commonly understood by those skilled in the art of the present application. The terms used in the description of this application are only for the purpose of describing specific embodiments, rather than limiting the present application. The terms "comprising" and "having" and any variations thereof in the specification and claims of the present application and the description of the drawings above are intended to cover non-exclusive inclusion. The terms "first", "second" and the like in the specification and claims of the present application or the above drawings are used to distinguish different objects, rather than to describe a specific sequence or primary-subordinate relationship.

Reference in this application to an "embodiment" means that a particular feature, structure, or characteristic described in connection with the embodiment may be included in at least one embodiment of the present application. This phrase occurring in various places in the specification are not necessarily all referring to the same embodiment, nor are separate or alternative embodiments mutually exclusive of other embodiments.

In the description of this application, it should be noted that, unless otherwise clearly specified and defined, the terms "installation", "link", "connection" and "attachment" should be understood in a broad sense. For example, it may be fixed connection, it may also be detachable connection or integral connection, it may be direct connection or indirect connection through an intermediary, or it may be internal communication between two components. Those skilled in the art can understand the specific meanings of the above terms in the present application according to specific situations.

The term "and/or" in the present application shows just an association relationship describing associated objects, which means that there may be three kinds of relationship. For example, A and/or B may indicate that: there is A, there are both A and B, and there is B. In addition, the character "/" in the present application generally indicates that the associated objects therebefore and thereafter have "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application, as well as the overall thickness, length, width and other dimensions of the integrated device, shown in the drawings, are for illustrative description only, and should not constitute any limitation to the present application.

The battery mentioned in the embodiments of the present application refers to a single physical module including one or more battery cells to provide higher voltage and capacity. The battery generally includes a box body used for packaging one or more battery cells. The box body can prevent liquid or other foreign objects from affecting the charging or discharging of the battery cell(s).

"Multiple" in the present application refers to two or more (including two).

In the present application, the battery cell may include lithium-ion battery, lithium-sulfur battery, sodium-lithium-ion battery, sodium-ion battery, or magnesium-ion battery, etc., which are not limited in the embodiments of the present application.

The core component of the battery that can realize the repeated charging and discharging functions is the electrode assembly in the battery cell. The electrode assembly includes electrode plates and a separator. The electrode plates include a positive electrode plate and a negative electrode plate. The separator is usually arranged between the positive electrode plate and the negative electrode plate to insulate the positive electrode plate and the negative electrode plate from each other. The material of the separator may be PP (polypropylene) or PE (polyethylene), etc. The battery cell works mainly by moving metal ions between the positive electrode plate and negative electrode plate. In the above, the electrode plate includes a current collector and an active material layer. The current collector has a coating area coated with the active material layer and an uncoated area not coated with the active material layer, in the width direction of the electrode plate. The current collector not coated with the active material layer is cut to obtain tab(s), and the tab(s) realizes the charging and discharging of the electrode assembly. The current collector may be metal foil, such as copper foil, aluminum foil, and the like.

At present, from the perspective of the development of the market situation, the electric vehicle has become an important part of the sustainable development of the automobile industry. The battery provides energy for the running of the vehicle body and the operation of various electric components in the vehicle body. Generally, a battery includes battery cell(s) and a thermal management component, the thermal management component is attached to the bottom wall of the battery cell(s) through a connector, and the thermal management component is used to accommodate a fluid (cooling liquid) to cool the battery cell(s), so that the battery cell(s) is subjected to charging and discharging at a safe temperature to ensure the safety of the battery. Generally, the surface of the bottom wall of each battery cell is a flat surface, and the connection strength between the thermal management component and the bottom wall of each battery cell is not high.

Under the condition that the connection strength between the thermal management component and the bottom wall of each battery cell is not high, when the battery cell expands due to charging and discharging, wherein the expansion force makes the bottom wall of the battery cell deformed, causing separation of the connector between the bottom wall of the battery cell and the thermal management component, or the connector is separated from the battery cell due to the mechanical vibration of the battery (the battery vibrates under external force, for example, the vibration of the battery generated during transportation, or the vibration generated due to vehicle travelling when the battery is applied to the vehicle), thus causing the thermal management component and the battery cell to separate from each other, thereby affecting the ability that the thermal management component adjusts the temperature of the battery cell, and affecting the safety of the battery.

Based on the above considerations, in order to ensure that the thermal management component is effectively connected to the battery cell and to ensure the safety of the battery, the inventors designed a battery through in-depth research, with the battery including the battery cell(s), the thermal management component and the connector. The thermal management component is used to accommodate a fluid to adjust the temperature of the battery cell(s). The connector is provided between the first surface(s) of the battery cell(s) and the thermal management component, and is used to make the thermal management component attached to the first surface(s). In the above, the first surface is a concave-convex surface.

In the technical solution of the embodiment of the present application, the first surface of the battery cell is a concave-convex surface. Compared with the solution in which the first surface is a flat surface, the contact area between the first surface and the connector can be increased, and the connection strength between the first surface and the connector is improved, so as to avoid occurrence of the situation that the thermal management component is separated from the battery cell which is caused by the mutual separation phenomenon occurring due to expansion or mechanical vibration of the battery cell (the phenomenon that the connector is separated from the first surface due to expansion force or vibration), and ensure that the thermal management component is stably connected to the battery cell, so that the thermal management component can effectively adjust the temperature of the battery cell, thereby ensuring the safety of the battery.

The technical solutions described in the embodiments of the present application are applicable to a battery and an electric device using the battery.

The electric device may be a vehicle, a mobile phone, a portable device, a laptop, a ship, a spacecraft, an electric toy and an electric tool, etc. The vehicle may be new energy vehicle, and the new energy vehicle may be pure electric vehicle, hybrid power vehicle or extended-range vehicle, etc. The spacecraft includes airplane, rocket, space shuttle and spacecraft, etc. The electric toy includes fixed or mobile electric toy, for example, game console, electric car toy, electric ship toy and electric airplane toy, etc. The electric tool includes metal cutting electric tool, grinding electric tool, assembly electric tool and railway electric tool, for example, electric drill, electric grinder, electric wrench, electric screwdriver, electric hammer, impact electric drill, concrete vibrator and electric planer, etc. The embodiment of the present application does not specifically define the above electric devices.

For the convenience of description, in the following embodiments, description is made by using a vehicle as an example of the electric device.

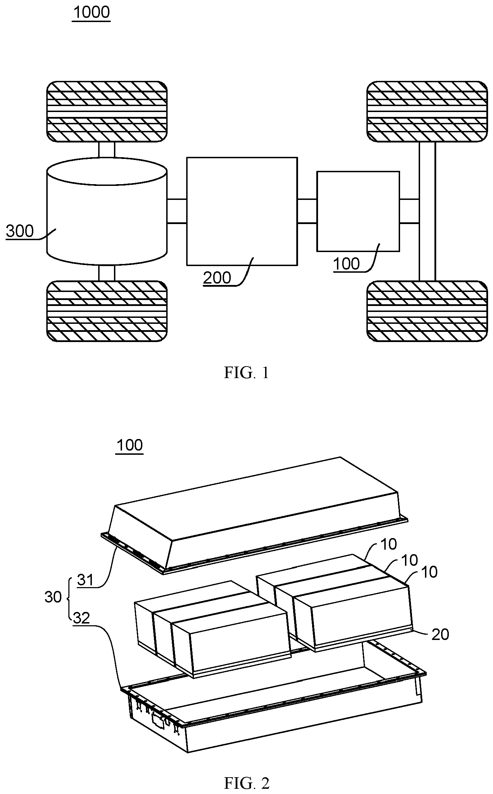

FIG. 1 is a schematic structural view of a vehicle in some embodiments of the present application.

A controller 200, a motor 300 and a battery 100 may be provided inside the vehicle 1000, and the controller 200 is used to control the battery 100 to supply power to the motor 300. For example, the battery 100 may be provided at the bottom or head or tail of the vehicle 1000. The battery 100 may be used to supply power to the vehicle. For example, the battery 100 may be used as an operating power source of the vehicle 1000, for a circuit system of the vehicle 1000, for example, for working power requirements during starting, navigating, and running of the vehicle 1000. In another embodiment of the present application, the battery 100 can not only be used as an operating power source for the vehicle 1000, but also be used as a driving power source for the vehicle 1000, to replace or partially replace fuel oil or natural gas to provide driving power for the vehicle 1000.

Referring to FIG. 2, FIG. 2 is an exploded view of a battery in some embodiments of the present application.

The battery 100 includes battery cells 10, a box body 30, and a thermal management component 20. The battery cells 10 are accommodated in the box body 30. The thermal management component 20 is arranged on the bottom walls 120 of the battery cells 10. The thermal management component 20 is used to accommodate a fluid, wherein the fluid may be a medium for regulating the temperature of the battery cells 10, such as cooling gas flow, cooling liquid, and the like. In the above, the box body 30 is used to provide accommodation space for the battery cells 10, and the box body 30 may be in various structures. In some embodiments, the box body 30 may include a first part 31 and a second part 32, wherein the first part 31 and the second part 32 cover each other, and the first part 31 and the second part 32 together define an accommodation space used for accommodating the battery cells 10. The second part 32 may be in a hollow structure with one end open, the first part 31 may be in a plate-shaped structure, and the first part 31 covers the opening side of the second part 32, so that the first part 31 and the second part 32 together define the accommodation space. The first part 31 and the second part 32 may also each be in a hollow structure with one side open, and the opening side of the first part 31 covers the opening side of the second part 32. Of course, the box body 30 formed by the first part 31 and the second part 32 may be in various shapes, such as cylinder, cuboid and so on.

In the battery 100, there may be one or more battery cells 10, and each battery cell 10 may be fixed to the box body 30 by corresponding fasteners (such as bolts), or each battery cell 10 may be fixed to the box body 30 by means of bonding.

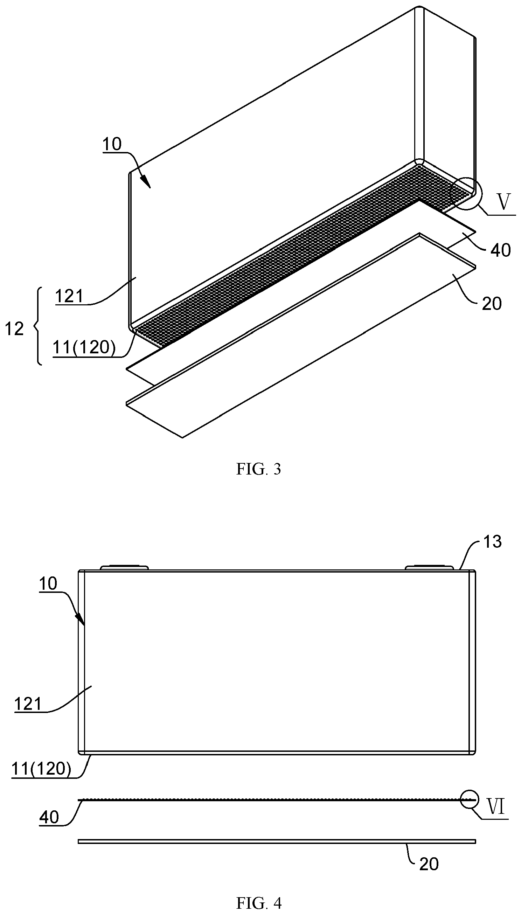

In some embodiments of the present application, referring to FIG. 3 and FIG. 4, FIG. 3 is a three-dimensional exploded view of the battery cell 10, the connector 40 and the thermal management component 20 in some embodiments of the present application, and FIG. 4 is schematic view of the battery cell 10, the connector 40 and the thermal management component 20 in some embodiments of the present application.

The battery includes a battery cell 10, a thermal management component 20 and a connector 40. The thermal management component 20 is used to accommodate a fluid to adjust the temperature of the battery cell 10. The connector 40 is provided between the first surface 11 of the battery cell 10 and the thermal management component 20, for making the thermal management component 20 attached to the first surface 11. In the above, the first surface 11 is a concave-convex surface.

The first surface 11 is an end surface, of the battery cell 10, connected to the connector 40, and is also a surface of the battery cell 10 that exchanges heat with the thermal management component 20. The first surface 11 is a concave-convex surface, which means that the first surface 11 is not a flat surface, but is uneven. Compared with the solution in which it is a flat surface, it has a larger contact area with the connector 40. The thermal management component 20 is a component used for performing thermal management on the battery, which can exchange heat with the battery through a medium to control the temperature. Exemplarily, the thermal management component 20 may be a component for accommodating a fluid, and the thermal management component 20 may exchange heat with the battery cell 10 through the fluid to adjust the temperature of the battery cell 10, so as to ensure the safety of the battery cell 10. For example, the thermal management component 20 may be a water-cooled plate, and the fluid accommodated therein is cooling liquid, wherein the heat of the battery cell 10 generated due to charging and discharging is taken away by the cooling liquid. In addition, the thermal management component 20 may also be used to raise the temperature of multiple battery cells 10 by heating the fluid, which is not limited in this embodiment of the present application.

The connector 40 is a component that makes the thermal management component 20 attached to the first surface 11 of the battery cell 10.

In the technical solution of the embodiment of the present application, the first surface 11 of the battery cell 10 is a concave-convex surface. Compared with the solution in which the first surface 11 is a flat surface, on the one hand, the contact area between the first surface 11 and the connector 40 can be increased, that is, the connection strength between the first surface 11 and the connector 40 is increased, so as to avoid occurrence of the situation that the thermal management component 20 is separated from the battery cell which is caused by the mutual separation phenomenon occurring due to expansion or mechanical vibration of the battery cell 10 (the phenomenon that the connector 40 is separated from the first surface due to expansion force or vibration), and ensure that the thermal management component 20 is stably connected to the battery cell 10, so that the thermal management component 20 can effectively adjust the temperature of the battery cell 10, thus ensuring the safety of the battery; and on the other hand, the heat exchange area between the thermal management component 20 and the battery cell 10 can be increased, thereby improving the heat conduction efficiency between the thermal management component 20 and the battery cell 10.

In some embodiments of the present application, the connector 40 is an adhesive layer.

The adhesive layer, a component that connects the battery cell 10 to the thermal management component 20, may be formed by solidifying an adhesive solution with adhesive property. For example, the adhesive layer is formed by injecting an adhesive solution between the first surface 11 of the battery cell 10 and the thermal management component 20, and solidifying the adhesive solution.

In the technical solution of the embodiment of the present application, the thermal management component 20 is bonded to the first surface 11 of the battery cell 10 through the adhesive layer. On the one hand, the assembly efficiency of the thermal management component 20 and the battery cell 10 can be improved. On the other hand, since the first surface 11 is a concave-convex surface, there is a large bonding area between the adhesive layer and the battery cell 10, which can avoid occurrence of the situation that the thermal management component 20 is separated from the battery cell 10 which is caused by the debonding phenomenon occurring due to the expansion or mechanical vibration of the battery cell (the adhesive layer is separated from the first surface 11), and ensure that the thermal management component 20 is stably connected to the battery cell 10, so that the thermal management component 20 can effectively adjust the temperature of the battery cell 10 to ensure the safety of the battery.

Optionally, in some other embodiments, the connector 40 may also be other component capable of making the thermal management component 20 attached to the first surface 11 of the battery cell 10. For example, the connector is a magic sticker (velcro tape) provided between the first surface 11 and the thermal management components 20.

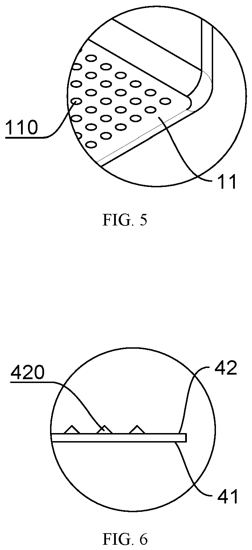

In some embodiments of the present application, referring to FIG. 4, FIG. 5 and FIG. 6, FIG. 5 is an enlarged view of Place V in FIG. 3, and FIG. 6 is an enlarged view of Place VI in FIG. 4. The first surface 11 has multiple grooves 110, the adhesive layer (connector 40) has a second surface 41 and a third surface 42 opposite to each other in its thickness direction, the second surface 41 is connected to the thermal management component 20, the third surface 42 has multiple protrusions 420, and the protrusions 420 are embedded in the grooves 110.

The groove 110 is a structure recessed from the first surface 11 into the battery cell 10 and also a structure for accommodating the protrusion 420. The protrusion 420 is a structure formed on the third surface 42 of the adhesive layer (connector 40). The protrusion 420 protrudes from the third surface 42 and is embedded in the groove 110. The non-protruding area of the third surface 42 is connected to the non-groove area of the first surface 11.

In the technical solution of the embodiment of the present application, the protrusions 420 on the third surface 42 of the adhesive layer (connector 40) are embedded in the grooves 110 on the first surface 11 of the battery cell 10, which can effectively improve the connection strength between the adhesive layer (connector 40) and the battery cell 10, thereby ensuring the connection strength between the battery cell 10 and the thermal management component 20, avoiding the debonding phenomenon occurring due to the self-expansion force of the battery cell 10 or the mechanical vibration of the battery cell 10, and ensuring that the thermal management component 20 is stably connected to the battery cell 10 to effectively adjust the temperature of the battery cell 10 and thereby ensure the safety of the battery.

In some embodiments of the present application, as shown in FIG. 5, the multiple grooves 110 are in dense dot-like arrangement.

The dense dot-like arrangement may refer to that the multiple dot-like grooves 110 are densely arranged on the first surface 11 according to a certain rule or irregularly. The "dot-like grooves 110" may mean that when looking directly at the first surface 11, each of the grooves 110 is non-strip-shaped, wherein the length and width of its opening are almost the same or the shape of its opening is in a shape of circle, triangle, quadrilateral, pentagon, etc.

In the technical solution of the embodiment of the present application, the number of grooves 110 is multiple, and the multiple grooves 110 are in dense dot-like arrangement, which, on the one hand, can effectively increase the bonding area between the first surface 11 and the adhesive layer (the connector 40) and on the other hand enable uniform stress between the first surface 11 and the adhesive layer (the connector 40). Each protrusion 420 is embedded in the corresponding groove 110, which can effectively improve the connection strength between the adhesive layer (connector 40) and the first surface 11, so that the thermal management component 20 is stably connected to the battery cell 10, ensuring the safety of the battery.

In some embodiments of the present application, as shown in FIG. 5, the grooves 110 are tapered.

The grooves 110 are tapered, referring to that a conical filler is filled in the grooves 110, or that the inner diameter of each of the grooves 110 gradually decreases from the opening of the groove 110 to the deepest part of the groove 110.

In the technical solution of the embodiment of the present application, the taped grooves 110 can be conveniently and quickly formed on the first surface 11 of the battery cell 10 by means of stamping, etc., so as to reduce the manufacturing difficulty of the battery cell 10. At the same time, when the groove 110 is tapered, the adhesive solution is injected between the thermal management component 20 and the first surface 11, which can facilitate the filling of the adhesive solution in the groove 110 (the inner diameter of the groove 110 gradually decreases, so the adhesive solution is filled first in the part with a large inner diameter under the action of the injection pressure, and as the amount of the injected adhesive solution increases, gradually filled in the deep part with a small inner diameter, wherein since the inner diameter of the deep part is small, the filling amount is small, which can reduce the load of solution injection), to form the protrusions 420 when the adhesive solution is solidified (as shown in FIG. 6), and the protrusions 420 can be tightly bonded to the inner wall of the groove 110.

Optionally, in some embodiments, the grooves 110 may be in a hemispherical shape, and correspondingly, the protrusions 420 may be in a hemispherical shape capable of being embedded and fitting in the grooves 110.

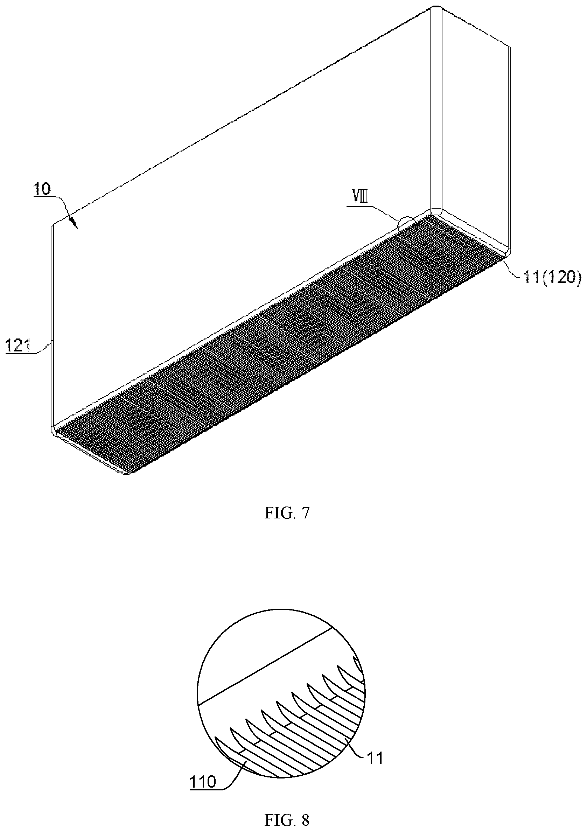

In other embodiments of the present application, referring to FIG. 7 and FIG. 8, FIG. 7 is a schematic view of a battery cell 10 in other embodiments of the present application, and FIG. 8 is an enlarged view of VIII in FIG. 7. The grooves 110 extend in a first direction, multiple grooves 110 are arranged at intervals in a second direction, and the first direction is perpendicular to the second direction.

In the technical solution of the embodiment of the present application, the multiple grooves 110 are arranged at intervals in the second direction, and each groove 110 extends in the first direction, which can effectively improve the bonding area between the first surface 11 and the adhesive layer (connector 40), thereby ensuring the connection strength between the battery cell 10 and the thermal management component 20, preventing the thermal management component 20 from being separated from the battery cell 10, and ensuring the safety of the battery.

In other embodiments of the present application, the first surface 11 is a rectangular surface, one of the first direction and the second direction is the length direction of the first surface 11, and the other is the width direction of the first surface 11.

In the technical solution of the embodiment of the present application, the first surface 11 is a rectangular surface, one of the first direction and the second direction is the length direction of the first surface 11, and the other is the width direction of the first surface 11, so when machining the grooves 110, positioning may be performed based on the outer contour of the first surface 11, to reduce the difficulty in machining the grooves 110, thereby improving the manufacturing efficiency of the battery.

In other embodiments of the present application, as shown in FIG. 8, the two ends of the groove 110 respectively extend to the edges of the first surface 11.

That "the two ends of the groove 110 respectively extend to the edges of the first surface 11" may refer to that the groove 110 extends from one edge of the first surface 11 to another edge of the first surface 11, or, in other words, the two ends of the groove 110 both communicate with the outside, which is different from the solution in which the groove 110 is provided in the outer contour of the first surface 11 and the groove 110 does not communicate with the outside.

In the technical solution of the embodiment of the present application, the two ends of the groove 110 extend to the edges of the first surface 11. On the one hand, the groove 110 extends from one edge of the first surface 11 to another edge, which can reduce the difficult in shaping of the groove 110, and on the other hand, it facilitates injecting an adhesive solution (adhesive injection) into the groove 110 from the edge of the first surface 11, improves the efficiency of adhesive injection, and ensures that the groove 110 is full of the adhesive solution, so that the adhesive layer (connector 40) formed after the adhesive solution solidifies can be closely bonded to the inner wall of the groove 110 and the non-groove 110 area of the first surface 11 to ensure the connection strength between the adhesive layer (connector 40) and the battery cell 10.

Optionally, in some embodiments, both ends of the groove 110 can be located within the outer contour of the first surface 11.

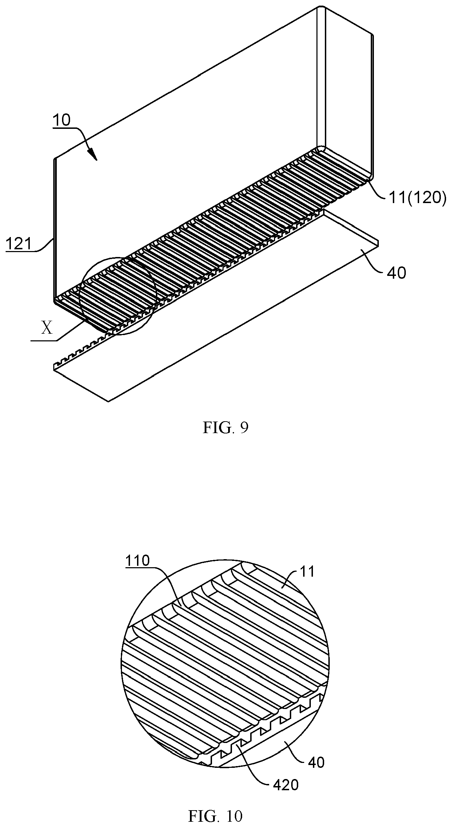

In other embodiments of the present application, with reference to FIG. 8, FIG. 9 and FIG. 10, FIG. 9 is a schematic view of the battery cell 10 and the adhesive layer (connector 40) in other embodiments of the present application, and FIG. 10 is an enlarged view of Place X in FIG. 9. The cross-section of the groove 110 is triangular or rectangular.

The cross-section of the groove 110 is triangular, which refers to that the cross-sectional shape of the groove 110 perpendicular to the extending direction of the groove 110 is triangular, the groove 110 has two mutually inclined inner walls. Correspondingly, the cross-section of the protrusion 420 of the adhesive layer (connector 40) is also triangular, and the two inclined walls of the protrusion 420 of the adhesive layer (connector 40) are respectively corresponding to the two inner walls of the groove 110.

The cross-section of the groove 110 is rectangular, which refers to that the cross-sectional shape of the groove 110 perpendicular to the extending direction of the groove 110 is rectangular. The groove 110 has a top wall and two parallel inner walls, and the two inner walls are connected to the top wall respectively. Correspondingly, the cross-section of the protrusion 420 of the adhesive layer (connector 40) is also rectangular, and the three surfaces (two side walls and the top wall) of the protrusion 420 of the adhesive layer (connector 40) are respectively corresponding to the top wall and inner walls of the groove 110.

According to the technical solution of the embodiment of the present application, when the cross-section of the groove 110 is triangular, the protrusion 420 is correspondingly triangular, and the two mutually inclined outer walls of the protrusion 420 are adhered to the two mutually inclined inner walls of the groove 110. That is, the two surfaces of the protrusion 420 are bonded to the two surfaces of the groove 110, which can increase the bonding area between the first surface 11 and the adhesive layer (connector 40). When the cross-section of the groove 110 is rectangular, the protrusion 420 is correspondingly rectangular, and the top wall and two opposite side walls of the protrusion 420 are respectively bonded to the top wall and the opposite side walls of the groove 110. That is, the three surfaces of the protrusion 420 are bonded to the three surfaces of the groove 110, which can effectively increase the bonding area between the first surface 11 and the adhesive layer (connector 40).

Optionally, the cross-section of the groove 110 may be semicircular, pentagonal or hexagonal, etc.

In some embodiments of the present application, as shown in FIG. 3 and FIG. 4, the battery cell 10 includes a casing 12 and an end cover 13. The casing 12 includes a bottom wall 120 and a side wall 121, the side wall 121 surrounds the bottom wall 120, with one end of the side wall 121 being connected to the bottom wall 120, and the other end of the side wall 121 defining an opening, the end cover 13 covers the opening, and the first surface 11 is the outer surface of the bottom wall 120.

The electrode assembly of the battery cell 10 is provided in the casing 12, and the end cover 13 covers the opening to seal the battery cell 10 in the casing 12. The first surface 11 is the outer surface of the bottom wall 120, which refers to that the surface of the bottom wall 120 away from the end cover 13 is the first surface 11, and the first surface 11 is a concave-convex surface, and also a surface bonded to the thermal management component 20 through the adhesive layer (connector 40).

According to the technical solution of the embodiment of the present application, generally, the thermal management component 20 is provided on the bottom wall 120 of the battery cell 10, and when the first surface 11 is the outer surface of the bottom wall 120, the connection strength between the bottom wall 120 and the adhesive layer (connector 40) can be improved, thereby improving the connection strength between the bottom wall 120 and the thermal management component 20, preventing the thermal management component 20 from being separated from the battery cell 10, and ensuring the safety of the battery. At the same time, when the first surface 11 is the outer surface of the bottom wall 120, the concave-convex surface of the bottom wall 120 can reduce the chance of the battery cell 10 being in contact with a carrier during transportation and assembly, and reduce the probability of surface contamination. Thus, when the outer surface of the bottom wall 120 of the battery cell 10 is the first surface 11, the cleaning process of the battery cell 10 before battery assembly may be omitted.

Optionally, the first surface 11 may also be the outer surface of the side wall 121 of the battery cell 10. For example, the first surface 11 may be the outer surface of the side wall 121 of the battery cell 10, with a smaller area.

Some embodiments of the present application further provide an electric device, including the battery provided in any one of the above embodiments, wherein the battery is used to provide electric energy.

Some embodiments of the present application also provide a battery, referring to FIG. 3-FIG. 10. The battery includes a battery cell 10, a thermal management component 20 and a connector 40, wherein the connector 40 is an adhesive layer. The battery cell 10 includes a casing 12 and an end cover 13. The casing 12 includes a bottom wall 120 and a side wall 121. The side wall 121 surrounds the bottom wall 120. One end of the side wall 121 is connected to the bottom wall 120, and the other end of the side wall 121 defines an opening. The end cover 13 covers the opening, and the outer surface of the bottom wall 120 is the first surface 11. The thermal management component 20 is a water-cooled plate for accommodating a cooling liquid to adjust the temperature of the battery cell 10. The connector 40 is a component provided between the first surface 11 and the water-cooled plate, and is used for bonding the water-cooled plate to the first surface 11. In order to increase the bonding area between the first surface 11 and the water-cooled plate and ensure the connection strength between the water-cooled plate and the battery cell 10, the first surface 11 is provided as a concave-convex surface. The first surface 11 has multiple grooves 110. The connector 40 has a second surface 41 and a third surface 42 opposite to each other in its thickness direction, the second surface 41 is connected to the thermal management component 20, and the third surface 42 has multiple protrusions 420. The protrusions 420 are embedded in the grooves 110. Since the protrusions 420 are embedded in the grooves 110, a physical engagement effect is formed between the connector 40 and the first surface 11, which improves the anti-expansion force of the battery cell 10, thus avoiding occurrence of the situation in which the water-cooled plate is separated from the battery cell 10 which is caused by the debonding phenomenon occurring due to the expansion of the battery cell 10 (the connector 40 is separated from the first surface 11), and also improves the overall structural strength between the battery cell 10 and the water-cooled plate, thus avoiding the debonding phenomenon occurring due to mechanical vibration. In the above, in some cases, as shown in FIG. 5, the multiple grooves 110 are in dense dot-like arrangement. In some other cases, as shown in FIG. 8 and FIG. 10, the grooves 110 extend along the width direction of the bottom wall 120, the multiple grooves 110 are arranged at intervals in the length direction of the bottom wall 120, and the two ends of each groove 110 respectively extend to the edges of the first surface 11. In this case, the cross-section of the groove 110 may be triangular or rectangular.

The above are only preferred embodiments of the present application, and are not intended to limit the present application. For those skilled in the art, there may be various modifications and changes in the present application. Any modifications, equivalent replacements, improvements, etc., made within the spirit and principle of this application, shall be included within the protection scope of this application.

## Claims

1. A battery, comprising:
a battery cell;
a thermal management component, configured for accommodating a fluid to adjust a temperature of the battery cell; and
a connector, provided between a first surface of the battery cell and the thermal management component, and configured for making the thermal management component attached to the first surface,
wherein the first surface is a concave-convex surface.

2. The battery according to claim 1, wherein the connector is an adhesive layer.

3. The battery according to claim 2, wherein the first surface has multiple grooves, the adhesive layer has a second surface and a third surface opposite to each other in a thickness direction thereof, the second surface is connected to the thermal management component, and the third surface is provided with multiple protrusions, wherein the protrusions are embedded in the grooves.

4. The battery according to claim 3, wherein the multiple grooves are in dense dot-like arrangement.

5. The battery according to claim 3 or 4, wherein the grooves are tapered.

6. The battery according to claim 3 or 4, wherein the grooves extend in a first direction, the multiple grooves are arranged at intervals in a second direction, and the first direction is perpendicular to the second direction.

7. The battery according to claim 6, wherein the first surface is a rectangular surface, one of the first direction and the second direction is a length direction of the first surface, and the other is a width direction of the first surface.

8. The battery according to claim 6 or 7, wherein two ends of each of the grooves respectively extend to edges of the first surface.

9. The battery according to any one of claims 6 to 8, wherein a cross-section of each of the grooves is triangular or rectangular.

10. The battery according to any one of claims 1 to 9, wherein the battery cell comprises a casing and an end cover, the casing comprises a bottom wall and a side wall, the side wall surrounds the bottom wall, one end of the side wall is connected to the bottom wall, the other end of the side wall defines an opening, the end cover covers the opening, and the first surface is an outer surface of the bottom wall.

11. An electric device, comprising the battery according to any one of claims 1 to 10, wherein the battery is configured to provide electric energy.
